# EUROPEAN PATENT APPLICATION

(11) **EP 1 370 041 A1**
(43) Date of publication of application: **10.12.2003**
(21) Application number: 02368057.2
(22) Date of filing: 07.06.2002
(51) Int. Cl.: H04L 29/06, H04Q 7/38

(54) **Process and apparatus for communication between a mobile node and a communication network**

(71) Applicant: Institut Eurecom G.I.E., 06904 Sophia-Antipolis (FR)
(72) Inventor: Moret, Yan, Le Hameau de la Palmeraie, 06600 Antibes (FR); Bonnet, Christian, 06560 Valbonne (FR); Gauthier, Lionel, 06560 Valbonne (FR); Knopp, Raymond, 06250 Mougins le Haut (FR)
(74) Representative: Schuffenecker, Thierry

(57) **Abstract**

A process of securing communication between a first node and a second mobile node via a communication network involving the steps of:
- establishing at first and at least a second communication link between said second node and one particular duplication and merging agent located within said network;
- performing at least one duplication of each packet within said second node going to said first node (and inversely performing at least one duplication of each packet within said duplication and merging agent going to said second node), and
- forwarding the duplicated packets via said first and said least second communication links in order to transmit the same information through at least two different routes;
- merging the duplicated packets within duplication and merging agent (and inversely merging the duplicated packets within said second node) for the purpose of suppressing redundancy of the packets.

## Description

### Technical field of the invention

The invention relates to telecommunications and more particularly to a process and apparatus for increasing the quality of service between a mobile node and a communication network, particularly the IPv6 Internet network.

### Background art

The development of telecommunications and the Internet network in particular constantly opens new perspectives of communications and services for customers.

The latest version of the Internet Protocol - namely IPV6 - is a very promising area of technology which is the core of new communications possibilities and services in the future. The IPV6 version of the Internet network substantially differs from the known IPV4 version and provides additional features and new possibilities of communications, particularly for mobile nodes such as mobile telephones and other wireless communicating devices, as discussed in prior art document

Technical background information can be found in the following references: "Internet Protocol, Version 6 (IPv6) Specification", by S. Deering and R. Hinden RFC 2460, *IETF standard,* December 1998 and, regarding the mobility in IPv6, "Mobility Support in IPv6", David B. Johnson et al., draft ietf-mobileip-IPv6-14, *IETF draft,* March 2002.

The attachment of a mobile node to an IPV6 network is greatly facilitated thanks to the stateless auto-configuration address mechanism in the heart of the IPV6 standard - which permits every mobile node - or any communicating terminal - to be assigned its own configuration parameters including the Internet Protocol (IP) address, based on the interface identifier number and information received from the routers serving the attachment link.

More information regarding the autoconfiguration mechanism can be found in prior art reference "IPv6 Stateless Address Autoconfiguration", by S. Thomson et al., RFC 2462, *IETF standard,* December 1998 and also "IP version 6 Addressing Architecture", R. Hinden and S. Deering RFC 2373, *IETF standard,* July 1998.

The addressing mechanism of IPV6 is mainly based on a link address and a global address. The link address is the address which is exclusively used within the boundaries of a link and is defined on the basis of the Interface IDentifier (IID) assigned to the interface card of that node. The IID must be unique on the link and is derived from the hardware interface card address. When the mobile node - or any terminal - is attached to a link, a duplicate address detection process can be executed, which starts by the generation and transmission of a *Neighbour Sollicitation message* which is multicast over the link to the different devices attached to the same link. If no answer *(Neighbour Advertisement message)* is received from the link, the mobile node interprets this lack of answer as the evidence that its IID is unique within the link and can be used as a basis for the address. The mobile node then issues a multicast *Router Sollicitation message* to the attention of the routers attached to the considered link and their answer *(Router Advertisement message)* provide the mobile node with additional information which is used for determining the global address of the link and eventually other parameter values. The *Router Advertisement message* can be generated periodically. Thus, it is not necessary to send a *Router Solicitation message* in order to receive the router information. The global address of the mobile is obtained by the concatenation of the global link address and the IID of the interface. The global address can be used by any party located within the Internet network.

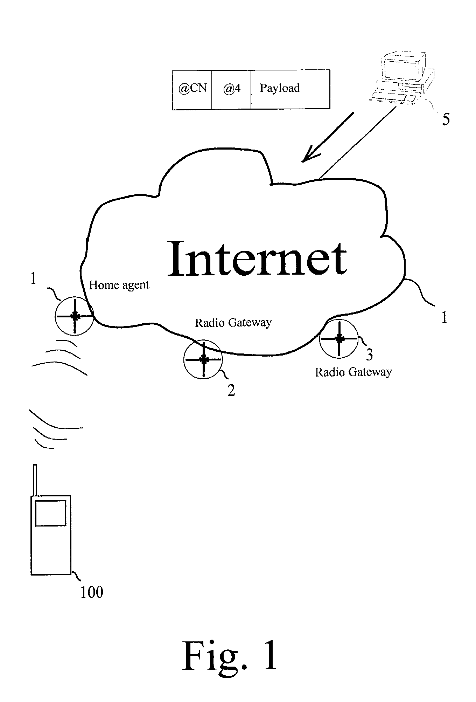

Figure 1 illustrates the establishment of a communication link between a mobile node 100, such as a telephone for instance, and a correspondent node 5 via a IPv6 Internet network 1 comprising a set of routers, some of them - herein referred to as radio-gateways - being fitted with radio transmission capabilities. Figure 1 illustrates three radio-gateways 1, 2 and 3. Radio-gateway 1 is assumed to be the home agent in the reference link of mobile telephone 100 and radio-gateways 2 and 3 consist in two neighbour gateways which are likely to serve as attachment points for the mobile node 100. Assuming that the mobile node 100 is attached to the radio gateway 2 and that the mobile is physically entering within the area of coverage of radio-gateway 3 for instance, and before any network access and data communication are established, signalling data are exchanged between mobile node 100 and radio-gateway 3. The above mentioned stateless autoconfiguration address process is initiated and mobile node recovers a new internet address (referred to as the Care-Of Address). Then, Mobile node 100 forwards a first *Binding Update message -* i.e. a specific IPv6 formatted message - which is transmitted to home agent 1 in the reference link, followed by additional binding updates for the attention of the different correspondents node so that the latter can use the global address of the new attachment point for the transmission of data.

This mechanism is generally referred to (in the art) as the handover procedure. In the meantime, until the correspondents are being notified and use the new Care-of Address of the mobile node within the second foreign link, there can be a substantial risk of loss and variable latency of data.

The risk of loss of data substantially increases when the mobile node is rapidly moving.

In order to prevent loss of data, a mechanism has been designed and described in prior art document "Optimized Smooth Handoffs in Mobile IP", Charles E. Perkins and Kuang-Yeh Wang , University of Maryland at College Park, IEEE proceedings 1999. This mechanism is based on cache mechanism. When the connection with radio-gateway 2 disappears, the packets are temporarily stored and cached within radio-gateway 2 until the mobile node notifies, via a *binding update message* and radio gateway 3, its new Care-of Address. The packets are then forwarded to the new address by means of a so-called tunnel which is achieved by encapsulating the IP packet in a new IP packet with the new address of the mobile node. Although the caching mechanism reduces the risk of loss of packets, it introduces an additional drawback due to the additional delays involved by the necessity to cache the data before re-forwarding to the new attachment point of mobile 100. This additional delay is clearly incompatible with some sensitive applications, such as voices processing, video-conferencing etc...

Another mechanism has been defined in prior document "Fast Handovers for Mobile IPv6", G. Dommety and al., draft-ietf-mobileip-fast-mlPv6-04, *IETF draft,* March 2002. This document discloses a system where, before occurring the handover, the mobile node 100 is able to obtain its new CoA on the new attachment of the mobile 100. When the handover occurs, the radio gateway 2 forwards all packets to the new attachment. The delays are significantly reduced, but in some conditions the loss of packets cannot be avoided.

In addition to the problem of handover, which still remains unresolved as explained above, there is still the general problem of the quality of service of the data communication based on radio transmission. More generally, even when no handover is involved, there is still a need for improving data communication between a mobile node and a IPV6 internet network.

### Summary of the invention

It is An object of the present invention is to improve the quality of service of data communications, particularly for mobile nodes communicating via radio transmission with a point of attachment to the Internet network.

It is another object to provide an efficient solution to the problem of handover of mobile nodes when those are physically moving between different entry points or radio-gateways attached to a Internet network.

These objects are achieved by means of a process of securing communication between a first node and a second node via a communication network involving the steps of:
- establishing at first and at least a second communication link between said second node and one particular duplication and merging agent located within said network;
- performing at least one duplication of each packet within said second node going to said first node (and inversely performing at least one duplication of each packet within said duplication and merging agent going to said second node), and
- forwarding the duplicated packets via said first and said least second communication links in order to transmit the same information through at least two different routes;
- merging the duplicated packets within duplication and merging agent (and inversely merging the duplicated packets within said second node) for the purpose of suppressing redundancy of the packets.

In one preferred embodiment, a duplicating and merging (D&M) agent is being established within the IPV6 network and is used for the duplication and for the merging of the packets going to and arriving from the communication links. Duplication and merging control information is introduced in a destination header in the IPV6 packets before they are forwarding to the first and least second links. At the other side, the control information is used for controlling the merging process at the destination so that there is no further need of synchronization of the duplicated packets arriving from the different links.

Preferably, the two communications links use two different radio-gateways and the second node is a mobile node communicating with the IPV6 network by means of a radio transmission. The mobile node must be able to communicate at the same time with at least two radio-gateways. For this purpose, the mobile node can have one multi-mode link interface (e.g. UMTS/WLAN) or several mono-mode link interfaces. In all cases, the mobile node must be able to communicate with several radio-gateways by the means of several radio technologies at the same time. So, a handover can be easily done from a radio link to another radio link with a different radio technology. The first and second substitute care-of addresses of the mobile node are used for controlling routing of duplicated packets via different radio-transmission paths. Therefore, there is provided a data communication with higher quality of services and with better performance during the handover of the mobile node.

In one particular embodiment, the mobile node is a router providing mobile attachment of a number of communicating terminals to the IPV6 Internet network. Alternatively, the mobile node is a mobile terminal such as a mobile telephone for instance, allowing high quality of service communication with the IPV6 internet network.

Preferably, considering the downlink communication of the second node, the D&M agent causes at least one duplication of each packet arriving from a correspondent node and the respective forwarding to the at least one and second link. Upon arrival in said second node, the packets are merged in accordance with said duplicating and merging control information.

Preferably, in the uplink communication, the second node causes at least one duplication of the packets to be forwarded to said D&M agent, which the latter merges again in accordance with said duplicating and merging control information.

In one embodiment, a destination header is arranged by said D&M agent duplicating the packets for the purpose of carrying duplication and merging control information. Preferably, the duplicating and merging agent provides a primary care-of address for said second node which is associated to at least a first and a second substitute care-of addresses so as to control duplication and different routings of the duplicated packets. The duplicating and merging agent causes duplication of the packets arriving from said first node by generating new IPV6 packets having destinations defined by said at least first and second care-of addresses, and a destination option containing duplication and merging control information.

Preferably, duplication is performed within the mobile node based on the constructions of new packets having said at least first and second substitute care-of addresses and destination options defining duplication and merging control information used for controlling a merging process within said agent.

The invention also provides an apparatus for a IPV6 communication network comprising:
- means for routing packet received from a first node and to be forwarded to a second node;
- means for establishing upon request of a duplication and merging solicitation message at least a first and at least a second communication links said second node;
- means for computing a primary care-of address to be used as a temporary address for said second node;
- a first table (40 and 42) defining the association of said primary care-of address with said at least first and second care-of address as well as a parameter serving for numbering the duplicated packets.
- a second table (41 and 43) for storing the list of packets not yet received for the purpose of controlling the merging of the packets arriving via said at least first and second links before they are forwarded to first node.

### Description of the drawings

An embodiment of the invention will now be described, by way of example only, with reference to the accompanying drawings, wherein:
Figure 1 illustrates the connection of a mobile node with a IPV6 Internet network.
Figure 2 illustrates the principle of the duplicating and merging process in accordance with the present invention.
Figure 3 illustrates the format of the duplicating table and the merging tables.
Figure 4 is a flow chart illustrating the downlink process for duplicating the packets within the duplication and merging agent 20.
Figure 5 is a flow chart illustrating the downlink process for merging the duplicated packets within the mobile node 4.
Figure 6 is a flow chart illustrating the uplink process for duplicating the packets within the mobile node 4.
Figure 7 is a flow chart illustrating the uplink process for merging the packets within the duplication and merging agent 20.
Figure 8 illustrates the signaling process for establishing a first link.
Figure 9 illustrates the messages exchanged during the signaling process of figure 8.

### Description of the preferred embodiment of the invention

The process and apparatus will be more particularly described in reference with the communication of a mobile node communicating with a IPV6 Internet network via a set of wireless network attachment points, such as radio-gateways. Indeed, the processes which will be described in detail are particularly suited for improving the quality of service of a data communication based on a radio transmission without increasing too much the burden and the flow within the core of the network. Further, it provides an efficient solution to the problem of handover when a mobile node is physically moving from the area of coverage of a first radio-gateway to the area covered by a second radio-gateway. While the application of the invention to radio-transmission communication will be particularly discussed it should however be noted that the mechanisms and processes which will be described hereinafter in detail can be easily adapted to any general data communication within an Internet network, where there is a need to reduce the risk of loss of data. The invention is fully compliant and an efficient complement with the mobile IPv6 standard defined in the above mentioned IETF reference. The description below will be more particularly developed in reference with the improvement of the quality of service of mobile telephone communications but it is clear that the processes are directly applicable to the improvement of a data communication between a mobile router of a virtual private network of a mobile equipment carriage, such as, without any limitations, a train, a plane, a ship etc...

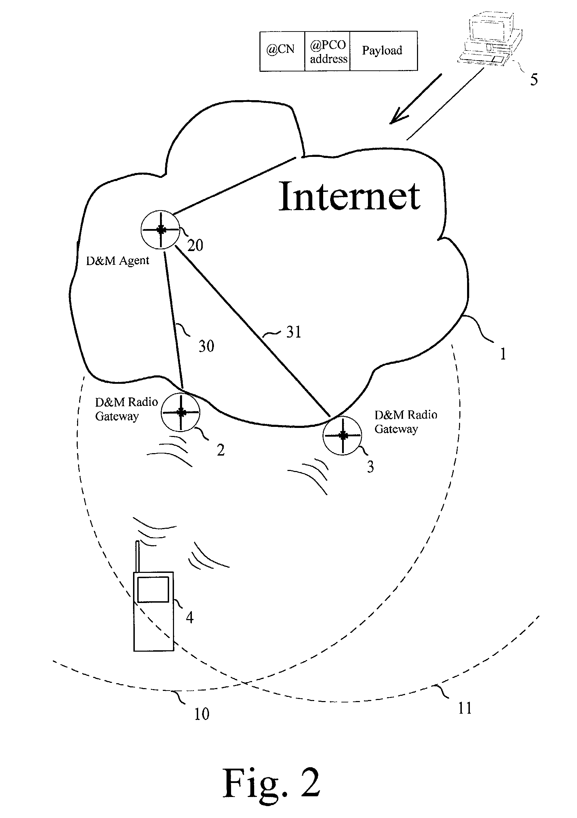

Figure 2 illustrates the principle of the establishment of a duplication and merging (D&M) agent within the IPv6 Internet network. A mobile node 4 is likely to communicate with a conventional correspondent node (CN) 5 via an Internet network complying with the IPv6 standard. A set of radio-gateways - such as gateways 2 and 3 shown in figure 2 - are attached via conventional Fast-Ethernet or Giga-Ethernet links to an Internet network 1 and are arranged to serve as basic attachment points for mobile node 4. The radio transmission between mobile node 4 and radio-gateways 2 or 3 can comply with any kind of known radio-transmission, such as 802.11 or Wideband Code Division Multiple Access(WCDMA) known in the Universal Mobile Telecommunications System (UTMS) standard.

Figure 2 shows dotted lines 10 which define the boundaries of the area covered by radio gateway 2 and dotted lines 11 define those of radio-gateway 3. Links 10 and 11 will be referred to as foreign links 10 and 11 in the remaining part of the description.

A specific router 20 is being assigned the role of a duplication & merging agent (D&M). Router 20 can be any conventional router which is fitted with an operating system and specific software code for the purpose of embodying the duplication and merging procedures which will be described hereinafter in detail. The position of router 20 is not critical although it will be preferably located at a median position along the data communication path, in between radio-gateways 2 and 3 and correspondent node 5. In some specific situations, it could be advantageous to physically embody D&M agent - or an instance of this agent - in radio-gateways 2 and 3, what automatically ensures the position on the data communication path. Other technical arrangements can be made without departing from the scope of the present invention.

Duplication and merging agent (D&M) 20 is arranged to establish at least a first and a second communication link 30 and 31 via two different radio-gateways, namely gateway 2 and 3. For the sake of clarity, the description will be developed in reference with the establishment of two different links but, clearly, more than two different links could be arranged. It will be apparent, from the reading of the specification below, that the invention can be used for more than two duplications since the merging process does not require the synchronization of the duplicated data in the mobile node 4. Figure 2 shows links 30 and 31 which respectively communicate with radio-gateway 2 and radio-gateway 3. The duplication and merging process which will be described above in detail is based on the use of a primary care-of address which is defined by D&M agent 20, which primary care-of (PCO) address is the particular address being registered in the home agent and known to the potential correspondent of the mobile node 4 (and represented in figure 2 as @PCO address). As will be described hereinafter in detail, the primary care-of address which is contained within the packets received from correspondent node 5 is used for causing, within D&M agent 20, a duplication process of the packets before they are forwarded to mobile node 4 via different radio-gateways. In the figure, at least one packet will be forwarded to mobile node 4 via radio gateway 2 and a second duplicated packet which will be routed to mobile node 4 via radio gateway 3. To achieve this, two substitute care-of addresses (or more if more than two different radio-gateways are arranged) are used for the transmission of the packet received from correspondent node 5 to mobile node 4 via two different communication paths and two different radio-gateways (of links 10 and 11). Automatic generation of the duplicated packets, each comprising its corresponding substitute destination address is being provided. In the downlink, during the duplication process within D&M agent 20, control information is incorporated within the IPV6 duplicated packets so as to control the merging process within mobile agent 4. Conversely, in the uplink, mobile agent 4 performs a duplication of the packets which are routed between at least two different radio routes, and the merging is achieved within D&M agent 20 under control of control information inserted by mobile node 4 within the duplicated packets. Therefore, the duplication and the merging of the packets are easily achieved without the need of synchronization of the packets which would be particularly difficult to achieve.

A particular destination option header is associated with the address of D&M router 20 for the purpose of carrying duplication and merging control information. In particular, the control information comprises the numbering of the duplicated packets before they are forwarded to the communication links 30 or 31, for the purpose of controlling the subsequent merging process. It should be noticed that the use of a destination option header is particularly advantageous and substantially facilitates the processing of the duplicated packets, and their merging after the transmission through links 30 and 31. Additional types of options of destination option header will be created for the purpose of achieving signaling of the communication.

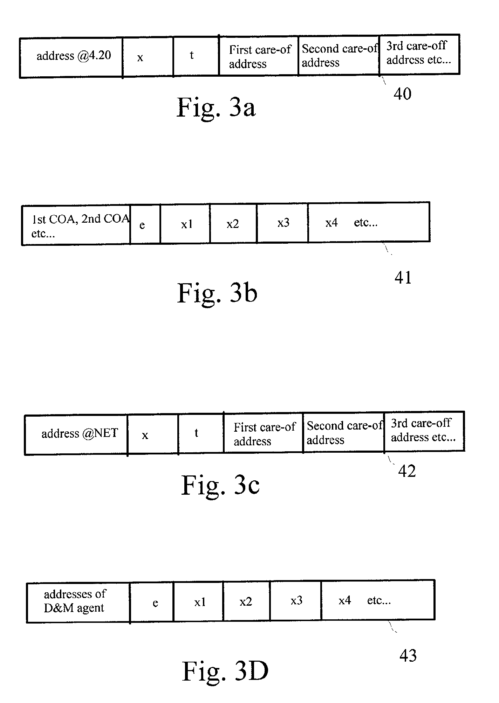

In addition to the specific software executable code which is required for the purpose of executing the duplication and merging processes which will be developed hereinafter in detail, D&M agent 20 incorporates a set of tables, particularly a first and a second table which respectively consists in a duplication control table 40 (figure 3a) and a merging control table 41 (figure 3b). First table 40 defines, for each entry being the primary care-of address defined by D&M agent 20 (e.g. address @4.20 of mobile node 4), the following information:
- t : being a period t defining the default time during which the entry should be kept within the duplication table without any acknowledgment from the mobile node;
- x : being a integer used for numbering the different packets arriving from a correspondent node,
- Substitute 1^{st} Care-Of address corresponding to the global link address of mobile 4 within link 10 for instance;
- Substitute 2^{nd} Care Of address corresponding to the global link address of mobile 4 within the second link 11 for instance;
- Substitute 3^{rd} Care Of address etc...

The information above will be used for controlling the duplication process within D&M agent 20.

A second table 41 defines, for each entry corresponding to a list of substitute temporary care-of addresses, e.g. the 1^{st} care-of address, the 2^{nd} care-of address, etc..., the values of parameter:
- e corresponding to the expected value being awaited. It is the integer which is immediately superior than the higher value of the parameter x of received packets;
- xᵢ corresponding to packets which are been transmitted by the correspondent node, but which are not yet received in mobile node 4. Table 41 therefore registers the list of values of parameter xᵢ which correspond to packets which are still missing.

Similarly, mobile node 4 incorporates, for the purpose of the execution of the processes which will be described hereinafter with detail, a third and a fourth table 42 and 43 which are respectively illustrated in figure 3c and 3d and which serve for the control of the duplication and merging process within mobile node 4.

Third table 42 is a duplication control table which defines the information required for controlling the duplication process within mobile node 20, having a structure similar than table 40: it defines, for each entry being a network address of destination (typically the default route address), a value x, a period t of validity of the merging process, and at least one and second substitute care-of addresses.

A fourth table 43 defines, for each entry corresponding to the address of one D&M agent, the values of xᵢ corresponding to packets which are not yet received in mobile node 4.

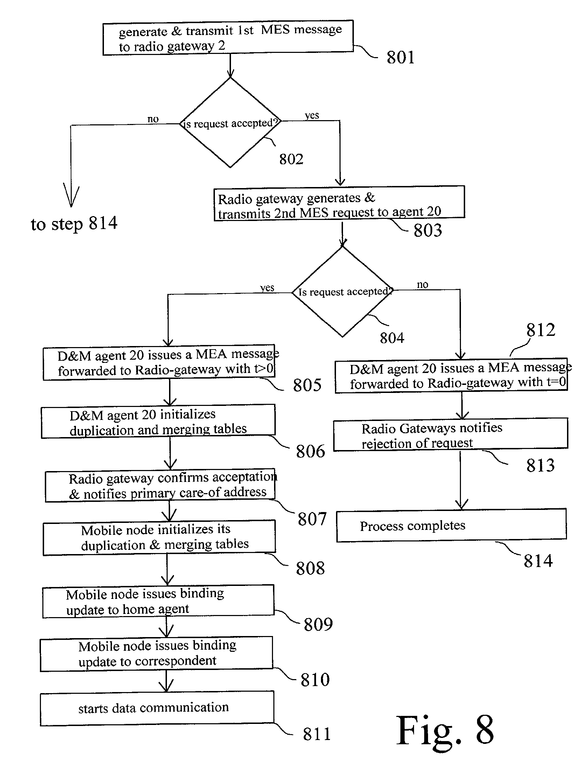

With respect to the downlink procedure, there will now be described the duplication and the merging process of data arriving from correspondent node 5. For this purpose it is assumed that a link is already established between D&M agent 20 and mobile node 4 and that the primary care-of address is already established, which will be assumed to be @4.20. Primary care-of address is the temporary address which is registered within home agent in the reference link of mobile node 4 and which is also used by the different correspondents which are likely to communicate with mobile node 4. The signaling process executed for the purpose of the establishment of the links will be more specifically described in reference with figure 8. The home address (address on the reference link) of mobile node 4 is assumed to be @4 and D&M agent 20 has further been informed via a signaling information of the two care-of address @4.10 and @4.11 of mobile node 4, respectively within link 10 and link 11. In the duplication and merging process which is described below, local care-of addresses @4.10 and @4.11 are respectively used as a first substitute care-of address and a second substitute care-of address permitting two different instances of the same packets to be forwarded via two different radio-gateways 2 and 3.

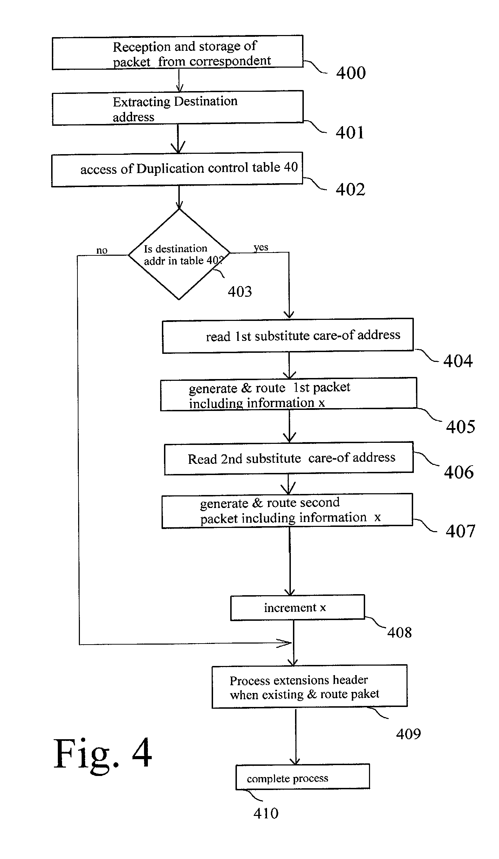

With respect to figure 4, the duplication process of the packets is now described in detail. In a step 400, D&M agent 20 receives and stores a packet arriving from the correspondent node 5 and stores in its (not shown) internal memory. The packet complies with the following format:

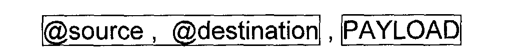

@source is - in accordance with the standard IPv6 format - the address of the source node. @destination field defines the address of the destination node. The payload is the data which is to be delivered to the upper layer of the application running within mobile node 4. In one particular embodiment the packet received from the correspondent node 5 includes both the address of the correspondent node (@5), the primary care-of address (@4.20) and the home address (@4) of mobile node, for instance as follows:

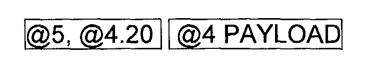

This is a technique known for facilitating the processing of the packets and the substitution of address @4.20 by address @4 at the delivery of the message to the mobile node. For the sake of clarity, and in order to exemplify the mechanism of the duplication and the merging, the presence of address @4 will be omitted.

In a step 401, the D&M agent 20 extracts from the packet the destination address (primary care-of address of the mobile node) and, in a step 402, it accesses duplication control table 40 for the purpose of identifying a potential entry corresponding to said primary care-of address.

This is achieved by a test performed in a step 403, where each entry of said table 40 is compared with the primary care-of address.
If no entry matches the primary care-of address, then the process directly proceeds with a step 409. The potential extension headers of the arriving packet are processed and the packet is routed. The process completes in the step 410.

Conversely, if test of step 403 succeeds, i.e. if one entry is found within duplication control table 40 to match the primary care-of address, the process then proceeds from step 403 to a step 404 where it reads the first substitute care-of address which is associated to this particular primary care-of address, e.g. address @4.10 identifying mobile node 4 within link 10.

In a step 405, a 1^{st} new IPv6 packet is constructed, based on the packet received from correspondent node, and using the 1^{st} substitute care-of address @4.10 as the new destination address. In addition, a destination option header (Destination Identifier Option) is used for inserting duplication and control information. In particular, a field of the destination option header defines the value of parameter x read from duplication control table 40. The format of the packet is the following:

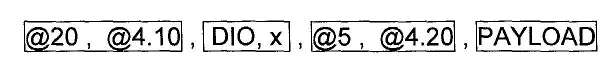

The payload of the new packet is the arriving packet (old packet), so the D&M agent has created a 1^{st} IPv6 tunnel between himself and the mobile node 4. The destination header option is inserted between the IPv6 header and the payload (old packet). The new IPv6 packet is routed following the 1^{st} link 30.

As known by the skilled man, a destination option header is a particular extension header permitted by the IPV6 standard and which is normally only read by the destination node (in our example the destination is identified by the address @4.10). In the process which is herein described, this header is used for carrying duplication and merging control information for the purpose of allowing duplicate radio transmission to a mobile node, so as to improve the quality of service of the radio transmission and to provide effective solution to the handover problem. The advantage of using this destination option header is that, firstly, the handling of the IPv6 packets carrying the duplicated information is made easy since those packets fully comply with the standard IPv6 rules and, additionally, an efficient merging process is achieved which permits wide duplications of the packets without requiring any synchronization of the different radio-gateways forwarding the packets to the mobile node 4. The option of the destination option header comprises:
- a first field defining the type of the option. A first type known as Destination Identifier Option or DIO is used for defining the packets carrying the value of parameter x used in the merging process.
- a second field defining the size of the option being considered;
- a third field containing an integer (x) identifying the order of the packet being considered. Preferably, the first field is 8 bits long, while the second and third fields are respectively 8 and 32 bits long.

As it will be seen below, with respect to figure 8, additional types of destination option headers will be used for the signaling process.

Step 406, consists in the reading of duplication control table 40 for the purpose of extracting the second substitute care-of address associated to the considered entry of table 40 (i.e. address @4.11) identifying mobile node 4 within the second link 11.

In a step 407, this 2^{nd} local care-of address is used, in a similar manner than in step 406, for generating and routing a 2^{nd} new IPV6 packet structure based on this 2^{nd} substitute care-of address. The encapsulation of the original packet is performed and the new IPv6 packet is forwarded to mobile node via a different route, based on link 11. Preferably, the format of the second IPV6 packet is the following:

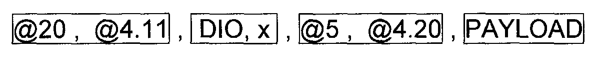

It can be seen that, since the two substitute care-of addresses are different, the two IPv6 packets are forwarded via two distinctive routes, and the value x is identical for the duplicated packets. This is particularly useful for duplicating the transmission provided by a poor quality radio transmission or in any situation where there is a need to guarantee that the same information has to be conveyed via two or more different paths.

The processing of the second duplication can then be followed by additional sequences of steps 404-405 or 406-407 for the purpose of launching additional duplications. This is achieved by means of additional substitute care-of addresses which can be read from table 40. For the sake of clarity, figure 4 only illustrates the creation of two different IPv6 packets forwarded via two different routes. The skilled man will straightforwardly adapt the mechanism to any number of duplications which may be required.

In a step 408 the value of parameter x is incremented by one and stored within table 40. The process proceeds to step 409 where the possible extensions header are processed. As known by the skilled man, extension headers may include fragmenting headers, routing headers etc... which involve specific processing steps. In step 409, when applicable, the extension header are subject to the appropriate processing, well known to the skilled man, in accordance with the extension header being defined within the packet.

When the extension headers are processed, the packet is routed, and the process then completes in a step 410.

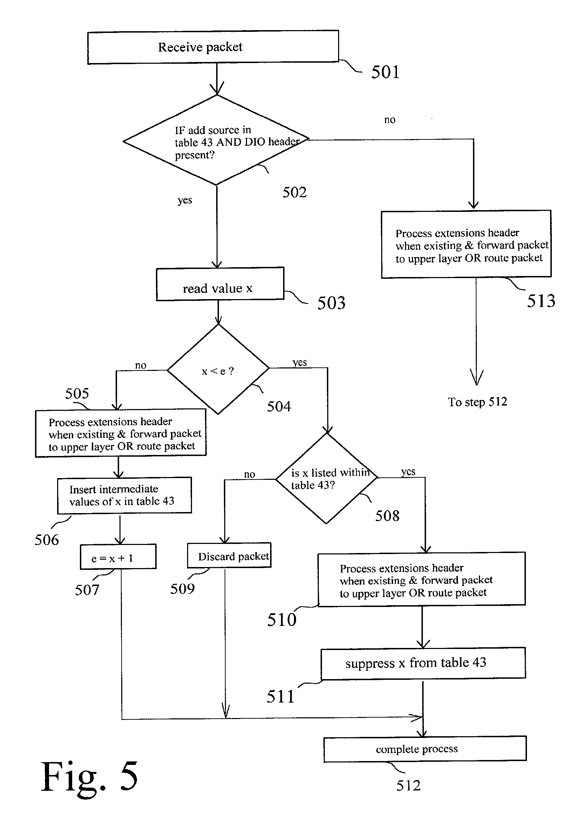

Figure 5 is a flow chart illustrating the downlink process for merging the duplicated packets within mobile node 4.

In a step 501, the process starts with the reception of one packet within mobile node 4. The packet can either be received from radio gateway 2 or radio gateway 3, respectively via link 10 or 11. It should be noticed that the merging process succeeds even if the two instances of the same original packets are not received at the same moment.

In response to the reception of one packet, the process proceeds in a step 502 where a double condition is being checked. Indeed, the process determines if an entry of the merging table 43 corresponds to the source address of the packet and if a Destination Identifier Option (DIO) is included in the packet. If both conditions are fulfilled, then the process goes to step 503 while, conversely, the process proceeds to a step 513 where two successive operations are being executed. Firstly, the potential extension headers of the arriving packet are processed as in step 409 of figure 4. Secondly, the payload is forwarded to the upper layer (e.g. when the mobile is the destination node) or routed to a link interface. The process then completes in the step 512.
If an entry corresponds to the source address and the DIO is included in the packet, this means that the source address is the address of a D&M agent and the packet has been duplicated. Thus, the parameter x within the DIO is read in a step 503 and, in a step 504, a test is performed to determine whether the value read is inferior than the expected value e of the Merging control table 43.

If x shows to be inferior than the expected value e, the process then proceeds to a step 508 which is a further test for determining whether the current value of x being carried by the destination option is included within the list of items of merging control table 43 .

If x is included within the table 43, this means that the received packet corresponds to one packet which is still missing and the process proceeds to a step 510 where the existing extended headers of the packet are being considered and the payload of the packet is being routed (the payload is a IPV6 packet). In a step 511 the current value of x is suppressed from table 43 and the process proceeds to step 512 where it completes.

If test of step 508 reveals that the current value of x is not listed within table 43, then the process proceeds to a step 509 where the packet is being discarded and the process proceeds to step 512.

If the current value of x shows to be superior than the expected value in step 504, the extended headers of the corresponding packet are processed and the payload is routed in a step 505 in mobile node 4 (the payload is an IPV6 packet).

The process then proceeds with a step 506 where the intermediate values between the expected number e and the value of x received are inserted within merging control table 43 as corresponding to new missing packets.

The process then proceeds to step 507 where the value e is setting to x+1 and stored as the next expected number of the packets identified by the DIO option. The process then proceeds to step 512.

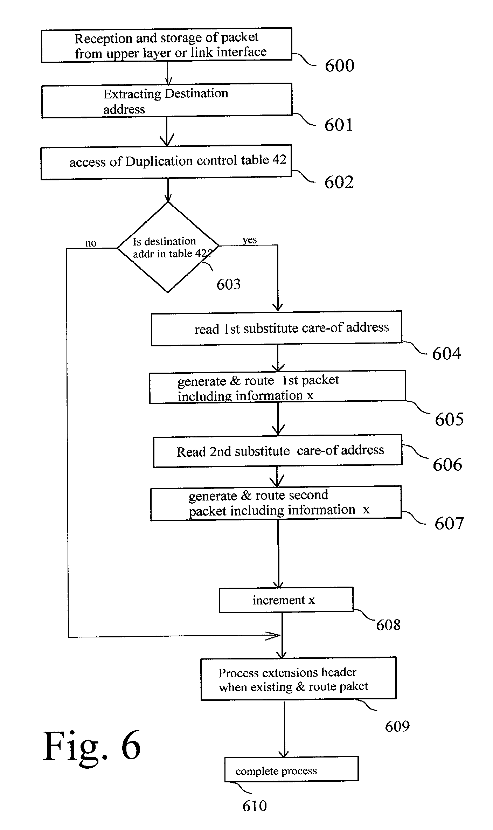

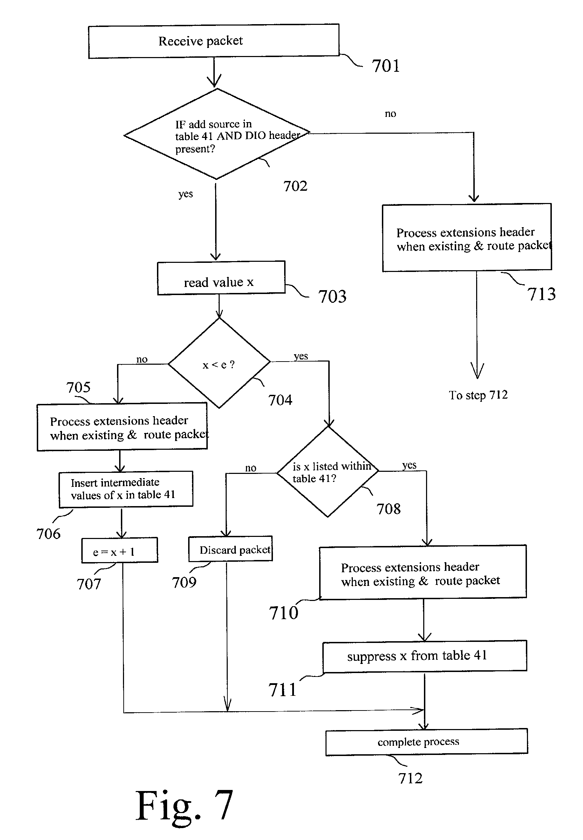

Figure 6 and figure 7 shows the processing of the packets in the uplink, comprising the duplication of the packets within mobile node 4, and their merging within D&M agent 20.

Figure 6 more particularly illustrates the duplication process in the mobile node which starts with the reception of a IPV6 packet from the upper link (or from a link interface) and which is to be distributed to the correspondent node. It should be noticed that this packet has an address defining the source of the packet which is the primary care-of address, i.e. address @4.20 for the case of mobile node 4.

In a step 600, the process receives a packet from the upper layer of the link interface, based for instance the following format:

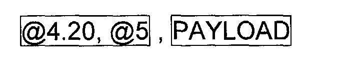

In a step 601, the process extracts from the packet the source address (the primary care-of address @4.20 of the mobile node) and, in a step 602, it accesses duplication control table 42 for the purpose of identifying a potential entry corresponding to said primary care-of address (i.e. a network address of the table 42 includes the primary care-of address).

This is achieved by a test performed in a step 603, where each entry of said table 42 is compared with the destination address.

If no entry matches the destination address, then the process proceeds with a step 609 where the existing extended headers of the arriving packet are processed and the packet is routed. Next, the process proceeds to step 610 where it completes.

Conversely, if one entry is found within duplication control table 42 to match the destination address, the process proceeds to a step 604 where it reads the first substitute care-of address which is associated to this particular destination address, e.g. address @4.10 which identifies mobile node 4 within link 10. A new IPV6 packet is then generated and routed in a step 605, which contains a destination option used for merging process within D&M agent 20. The format is the following in the preferred embodiment:

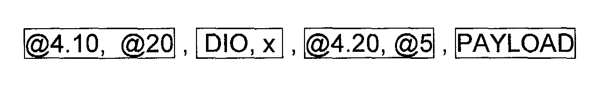

It can be seen that the source address of this new packet generated in step 605 comprises the care-of address which was read in step 604 and a destination address which is the address of D&M agent 20. Additionally, a destination header is being introduced, including the DIO, the parameter x used for numbering the packets.

In a step 606, the process reads again table 42 for the purpose of recovering the second substitute care-of address and, in a step 607, a new IPV6 packet structure is created (as in step 605 above) and routed based on this second substitute care-of address:

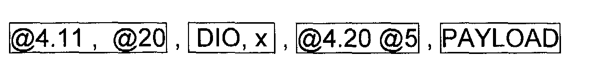

The two IPv6 packets containing duplicated information are forwarded to D&M agent 20 via two different routes. As previously, it should be noticed than more than two duplications can be contemplated, and the value of parameter x is read from duplication control table 42.

In step 608 the value of parameter x is incremented and stored within table 42. The process proceeds to step 614.

Figure 7 is a flow chart illustrating the uplink process for merging the duplicated packets within D&M agent 20.

In a step 701, the process starts with the reception of one packet within D&M agent 20. If the packet comes from the mobile node 4, the packet can either be received via the route defined by radio gateway 2 or the one defined by radio gateway 3, respectively via link 10 or 11.

In response to the reception of one packet, the process proceeds in a step 702 to determine if an entry of the merging table 41 corresponds to the source address of the packet and if a Destination Identifier Option (DIO) is included in the packet. If no entry corresponds to the source address or no DIO is included, the process incomes in the step 713, where the existing extended headers of the arriving packet are considered, and the packet is routed. The process is completed in the step 712.

If an entry corresponds to the source address and the DIO is included in the packet, then the source address is the address of a mobile node and the packet has been duplicated. Thus, the parameter x within the DIO is read in a step 703 and, in a step 704, a test is performed to determine whether the value read is inferior than the expected value e of the Merging control table 41.

If x shows to be inferior than the expected value e, the process then proceeds in a step 708 to a further test to determine whether the current value of x being carried by the destination option is included within the list of items of merging control table 41.

If x is included within the table 41, this means that the received packet corresponds to one packet which is still missing and the process proceeds to a step 710 where the payload of the packet is being routed (the payload is a IPv6 packet). In a step 711 the current value of x is suppressed from table 41 and the process completes in a step 712 and waits for an additional packet received either from link 10 or link 11.

If test of step 708 reveals that the current value of x is not listed within table 41, then the process proceeds to a step 709 where the packet is being discarded and the process incomes to step 712.

If the current value of x shows to be superior than the expected value e in step 704, the corresponding payload is routed in a step 705 (the payload is a IPv6 packet) to a link layer.

The process then proceeds with a step 706 where the intermediate values between the expected number e and the value of x received are inserted within merging control table 41 as corresponding to new missing packets.

The process then proceeds to step 707 where the value e is setting to x+1 and stored as the next expected number of the packets identified by the DIO option. The process proceeds then to step 714 Where it completes.

With respect to figure 8 there will now be described the signaling process and the establishment of the different links controlled by means of the first and second substitute care-of addresses. It is assumed that, at the beginning, the mobile node 4 is only connected via a level-2 connection to one radio-gateway, e.g. radio gateway 2. This implies that mobile node is assigned a local care-of address, which is address @4.10 in our example. The local care-of address can be obtained by the stateless autoconfiguration address. As previously for the DIO message, a *new destination* option is created with corresponds to the *MErging Solicitation message* (MES) and *Merging Advertisement message* (MEA). This is achieved by defining a new type of destination option. The format is the following:
- a first field defining the option type (MES or MEA);
- a second field defining the size of the option;
- a third field t defining the period during which the request is assumed to be valid;
- a fourth field for carrying the future primary care-of address which is determined by the D&M agent 20;
- and a fifth field for carrying all care-of address associated with the duplicated links.

In a step 801, the mobile node generates and transmits to radio-gateway 2 (the radio-gateway 2 address is @2) a *merging solicitation message* which complies with the following format:

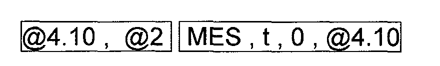

At this step of the procedure the primary care-of address field is empty. It can be seen that the first merging solicitation messages also comprises the local care-of address of the mobile node 4 within link 10 (ie. @4.10), and t must be superior to 0.

In a step 802, a test is performed in order to determine whether the radio-gateway which has received the merging solicitation request accepts or rejects the request. If the request is rejected, for instance if radio-gateway is temporarily lacking in resources - the process completes in a step 814.

If the request is accepted by radio-gateway 2, then the process proceeds to a step 803 where radio gateway determines the address of one D&M merging agent and generates a second merging solicitation message for the attention of Duplication & Merging (D&M) agent 20. It should be noticed that the radio-gateways, which are incorporated within the IPv6 network, are perfectly aware of the position of the different D&M agents or the instances of those running in some routers. In one embodiment, the radio-gateway is assigned a list of possible D&M agent which are likely to be used in response to a merging solicitation coming from a new mobile node. Alternatively, another mechanism can be useful for the purpose of determining one particular D&M agent within the network. This can be achieved by means of the utilization of an anycast D&M address (well known IPv6 address). The request will be routed with this anycast address, and will be recovered by the first D&M router on the network.

Whatever the particular mechanism used for selecting one D&M agent, it can be seen that, practically, the second merging solicitation message have the same format than that used by mobile node to issue the first merging solicitation request, in complies with the following one:

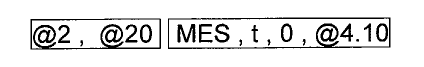

In a step 804, an additional test is performed in order to determine whether the D&M agent 20 accepts or not the requests transmitted by radio-gateway 20. If the request is accepted. The process proceeds with a step 805 where a *merging advertisement message* (MEA) is being issued and forwarded to the radio-gateway 2, preferably in the following format:

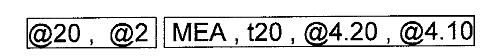

The t20 value must be superior to 0. It should be noticed that, as described above for the types DIO and MES, the destination option can still be advantageously used for defining this third type of signaling message for the purpose of controlling the duplication and merging processes illustrated in figures 4 to 7.

It can be seen that the merging acknowledgment message defines, in addition to a period of validity of the duplication and merging process (which can be different from the period requested by mobile node in its merging solicitation request), the particular primary care-of address (i.e. @4.20 in our example) which is to be used for the considered link.

In a step 806, the D&M agent 20 initializes the duplication and merging tables 40 and 41 by reserving specific area in its internal storage:
- in table 40, the new primary care-of address @4.20 entry is created with x=0, t=0 and the first local care-of address @4.10.
- in table 41, the new local care-of address entry is createc with e=0.

In a step 807, the radio gateway 2 issues an acknowledgment message to mobile 2 for the purpose of confirming it that the merging solicitation procedure has succeeded and, further, for forwarding the primary care-of address (@4.20) which has to be used for the purpose of controlling the duplication and merging process. Preferably, the format will be the following:

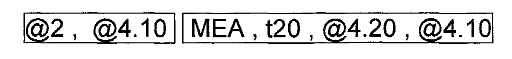

In a step 808, mobile node 4 initializes its duplication and merging tables 42 and 43:
- In table 42, the network address (it is either the default network address or a specific network address) entry is created with x=0, t=0;
- in table 43, the new local care-of address @4.10 entry is created with e=0.

Mobile node can then issue a binding update in a step 809 which permits to forwarding the primary care-of address to the home agent (not represented in the figure). In a step 810 a similar binding update is forwarded to the different correspondent node, including correspondent node 5

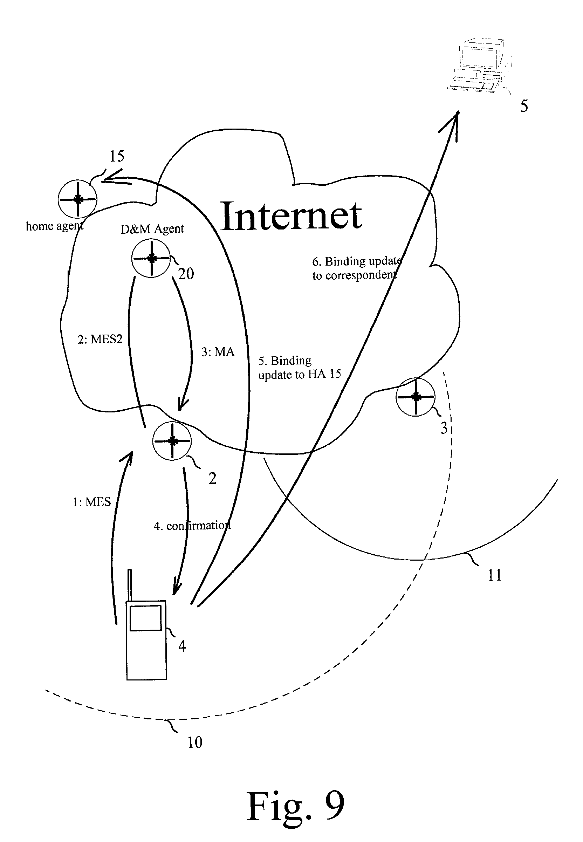

The different messages which are exchanged between the mobile node 4, the radio-gateway 2 and the D&M agent 20 are illustrated in figure 9.

From this instant, in step 811, mobile node 4 is able to use the new protected communication link with a correspondent node, utilizing the primary care-of address (e.g. @4.20) which was assigned to the mobile node. The only difference with the description developed in reference with figure 4 is that the duplication control table 40 only provides one local care-of address which is @4.10 and, therefore, there is no duplication at the moment. The duplication will be effective only when a new merging solicitation request will be issued by mobile 2 when the latter enters within the area of coverage of a second radio-gateway, e.g. radio-gateway 3. This is achieved as follows: when mobile node detects the presence of another radio-gateway, e.g. radio-gateway 3, it receives the care-of address (i.e. @4.11) and issues a merging solicitation request which is forwarded to radio-gateway 3 and then to D&M agent 20.

If the request was rejected in step 802, then the process proceeds with a step 812 where a merging advertisement (MEA) is being issued and forwarded to the radio-gateway 2 with the timer value set to 0:

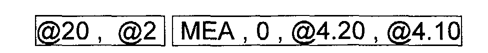

In a step 813, the radio gateway 2 issues a negative acknowledgment message to mobile 2 for the purpose of the unsuccessful of the merging solicitation procedure. The timer value of the MEA is set to 0:

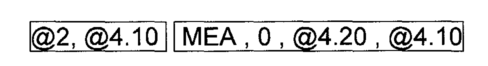

The mobile node 4 does not create another entry for its duplication and merging tables 42 and 43. The data communication cannot use this protected link. The process completes in a step 814,

In step 802, if the radio gateway 2 rejects the request, the process proceeds to the step 814.

A similar procedure than that of figure 8 is executed, what results in the update of the duplication and merging tables of both the D&M agent 20 and the mobile node 5, associated to the same primary care-of address. From this instant, the data communication can be established on the basis of a dual radio transmission, what increases security in the delivery of data and the handover.

If the mobile node 4 is connected via a level-2 connection to another radio-gateway, e.g. radio gateway 3. This implies that mobile node is assigned a local care-of address, which is address @4.11 in our example. In a step 801, the mobile node generates and transmits to radio-gateway 3 a merging solicitation message which complies with the following format: 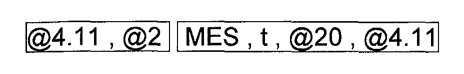 In step 804 (the request is accepted by the radio gateway 3), the radio gateway 3 sends the new ME*rging Solicitation message* (MES) with the following format:

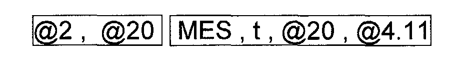

If the D&M agent and the radio gateway 3 accept the new request, the radio gateway should receive the Merging Advertisement message from the D&M agent with t20 superior to 0 and the following format: 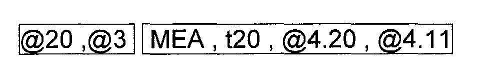 Then, the D&M agent updates its:
- table 40 by adding the new local care-of address @4.11 corresponding to the principal care-of address @4.20 entry;
- table 41 by adding a new local care-of entry in the corresponding care-of address list.
The mobile node 4 should receive the Merging Advertisement message from the radio gateway 3 with t20 superior to 0 and the following format: 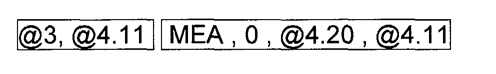 Then, the mobile node updates its table 42 by adding the new local care-of address @4.11 corresponding to the network address entry

It should be noticed that the establishment of the two links can be made simultaneously, by means of the same *MErging Solicitation message,* if the mobile node detects the present of two radio transmission. In this case, the secured data transmission can be established very rapidly. In order to established directly the link 10 and 11, the Merging Solicitation message could be with the following format 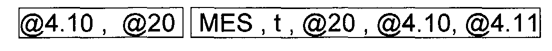 or

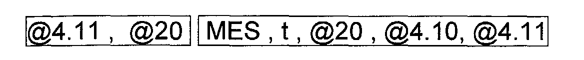

The mobile node releases a duplicated link by sending a MES with t=0 to the D&M agent. Thus, the following message will release the duplicated link associated with the link 30: 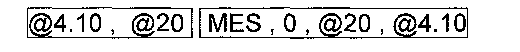 Similarly, The D&M agent or radio-gateway release a duplicated link by sending a MEA with t=0 to the mobile node.

Further, the use of the destination option for the purpose of establishing two different links being duplicated and merged shows to be very advantageous and flexible. In one embodiment, an additional destination option is established for allowing signaling information between different D&M agents located within the IPv6 network, whereby one D&M agent can delegate the duplication and merging task to another one. This can be particularly useful when one D&M agent is in a position of refusing any additional merging solicitation message which is likely to be forwarded to it. In this case, before rejecting the request as described in the process of figure 8, the D&M agent can advantageously issues a specific signaling request to another D&M agent which is more prepared to accept such request. This shows how flexible the mechanism and the duplication and merging process can be.

## Claims

1. Process for improving communication a first node (5) and a second node (4) via a telecommunication network (1), said process involving the steps of:
- establishing a first and at least a second communication link between said second node and one particular duplication and merging agent located within said network;
- performing at least one duplication of each packet within said second node going to said first node and inversely performing at least one duplication of each packet within said duplication and merging agent going to said second node, and
- forwarding the duplicated packets via said first and said least second communication links in order to transmit the same information through at least two different routes;
- merging the duplicated packets within duplication and merging agent and inversely merging the duplicated packets within said second node for the purpose of suppressing redundancy of the packets.

2. Process according to claim 1 **characterized in** it involves the steps of:
- establishing a duplicating and merging agent (20) within said network, said agent providing a primary care-of address for said second node which is associated to at least a first and a second substitute care-of address for said node so as to control duplication and routing of the duplicated packets via different routes.

3. Process according to claim 2 **characterized in that** said network is a IPv6 type network and that said duplicating and merging agent causes duplication of the packets arriving from said first node by generating new IPv6 packets having destinations defined by said at least first and second care-of addresses, and a destination option containing duplication and merging control information and wherein the merging is performed within said duplicating and merging agent based on said duplicating and merging control information contained within the IPv6 packets received.

4. Process according to claim 3 **characterized in that** a merging is performed within said second node based on said duplicating and merging control information contained within the IPv6 packets received. And inversely, that said second node causes duplication of the packets arriving from said duplication and merging agent by generating new IPv6 packets having destinations defined by said at least first and second care-of addresses, and a destination option containing duplication and merging control information.

5. Process according to claim 4 **characterized in that** a duplication is performed within said second node for packets t o be transmitted to said agent, said duplication being based on the constructions of new packets having said at least first and second substitute care-of addresses and destination options defining duplication and merging control information used for controlling a merging process within said agent.

6. Process according to claim 1 to 5 **characterized in that** said second node is a mobile node communication with said network with radio attachment points.

7. Process according to claim 6 **characterized in that** said duplication and merging agent exchanges with said mobile node signaling information containing within destination options of the IPv6 packets.

8. Apparatus for a IPv6 communication network comprising:
- means for routing packet received from a first node and to be forwarded to a second node;
- means for establishing upon request of a duplication and merging solicitation message at least a first and at least a second communication links said second node;
- means for computing a primary care-of address to be used as a temporary address for said second node;
- a first table (40) defining the association of said primary care-of address with said at least first and second care-of address as well as a parameter serving for numbering the duplicated packets.
- a second table (41) for storing the list of packets not yet received for the purpose of controlling the merging of the packets arriving via said at least first and second links before they are forwarded to first node.

9. Apparatus according to claim 8 **characterized in that** it is a radio-gateways allowing the attachment of mobile nodes.

10. Mobile node comprising means for performing the steps of process of claims 1 to 6.
